# EUROPÄISCHE PATENTSCHRIFT

(11) **EP 2 249 174 B1**
(45) Veröffentlichungstag und Bekanntmachung des Hinweises auf die Patenterteilung: **01.04.2015**
(21) Anmeldenummer: 10004237.3
(22) Anmeldetag: 21.04.2010
(51) Int. Cl.: G01S 7/497, G01S 7/481, G01S 17/08

(54) **Hilfsvorrichtung zur Feinjustierung eines Laserstrahls auf einen vorgebbaren Zielpunkt**
Help device for making fine adjustments to a laser beam on a pre-definable target
Dispositif d'aide à l'ajustement précis d'un rayon laser sur une cible prévisible

(30) Priorität: 06.05.2009 DE 102009019871
(43) Veröffentlichungstag der Anmeldung: 10.11.2010
(73) Patentinhaber: Maierhofer, Konrad, 83365 Nussdorf (DE)
(72) Erfinder: Maierhofer, Konrad, 83365 Nussdorf (DE)
(74) Vertreter: Grättinger Möhring von Poschinger Patentanwälte Partnerschaft

(56) Entgegenhaltungen:
- US-A- 4 483 618
- US-A1- 2008 043 237

## Beschreibung

Die vorliegende betrifft eine Hilfsvorrichtung und ein Verfahren zur Feinjustierung eines von einem Laserdistanzmessgerät ausgesandten Laserstrahls auf einen Zielpunkt.

Aus dem Stand der Technik sind bereits Hilfsvorrichtungen zur Feinjustierung eines von einem Laserdistanzmessgerät ausgesandten Laserstrahls bekannt, die einen Spiegel, eine hiervon beabstandete Tastspitze zur Anlage an den Zielpunkt und einen in einem Spiegelpunkt der Tastspitze zur Spiegelebene angeordneten Retroreflektor aufweisen.

Insoweit sei beispielsweise verwiesen auf die US 2005/0157410 A1, die US 4,886,353 sowie die US 5,530,549, wo entsprechende Hilfsvorrichtungen mit einem Retroreflektor gezeigt sind. Infolge der vorgegeben Anordnung und relativen Orientierung von Spiegel, Retroreflektor und Tastspitze wird ein auf einen Zielpunkt weisender Laserstrahl - bei Anlage der Tastspitze an dem Zielpunkt und bei geeigneter Positionierung der Hilfsvorrichtung im Strahlengang des Laserstrahls - von dem Spiegel auf den Retroreflektor gelenkt und von diesem unter einer erneuten Spiegelung am Spiegel zurück zum Laserinterferometer reflektiert. Die von dem Laserstrahl zurückgelegte Weglänge entspricht dabei exakt derjenigen, die sich bei einer direkten Reflektion des Laserstrahls am Zielpunkt ergäbe, so dass mit einer retroreflektierenden Hilfsvorrichtung der vorgenannten Art eine exakte Längenmessung zwischen Zielpunkt und Laserinterferometer ermöglicht wird. Laserinterferometer weisen zur Zusammenwirkung mit einer solchen Hilfsvorrichtung häufig auch eine die eigentliche Feinjustierung bewirkende Nachführeinheit auf, mit welcher der ausgesandte Laserstrahl unter Auswertung des von dem Retroreflektor zurückreflektierten Lasersignals präzise auf das Zentrum des Retroreflektors der Hilfsvorrichtung ausgerichtet wird bzw. bleibt, so dass der Laserstrahl einer räumlichen Verschiebung der in seinem Strahlengang befindlichen Hilfsvorrichtung folgt und bei Anlage der Tastspitze an einem neuen Zielpunkt exakt auf diesen ausgerichtet wird. Hierdurch lässt sich die Distanz zu Zielpunkten auf verschiedensten Oberflächen in einfacher Weise und mit hoher Präzision vermessen.

Laserinterferometer der vorgenannten Art sind jedoch vergleichsweise teuere Messgeräte, die zur Messung der Distanz zwischen Laserinterferometer und Zielpunkt auf eine besonders stark reflektierende Oberfläche, wie z.B. den in den genannten Hilfsvorrichtungen vorhandenen Retroreflektor, angewiesen sind. Eine Distanzmessung zu einem Zielpunkt auf einer natürlichen, d.h. nicht kooperativen bzw. nicht hinreichend reflektierenden Oberfläche ist somit ohne Zuhilfenahme einer geeignet reflektierenden Hilfsvorrichtung nicht möglich. Insbesondere die Distanz oder die relative Raumlage des Laserinterferometers zu - wegen ihrer Höhe oder Entfernung - nicht oder nur schwer erreichbaren Punkten kann somit nicht oder nur umständlich vermessen werden. Ferner bedarf es bei Laserinterferometern der genannten Art stets einer laserdistanzmessgeräteseitig vorzusehenden und komplexen Nachführeinheit, um unter Zuhilfenahme einer Hilfsvorrichtung der vorstehend beschriebenen Art eine Feinjustierung im vorstehend erläuterten Sinne zu realisieren.

Ein weiterer Nachteil von Hilfsvorrichtungen der vorgenannten Art ist, dass die gewünschte Präzision einer Distanzmessung maßgeblich von einer möglichst exakten (Relativ-)Anordnung von Tastspitze, Spiegel und Retroreflektor abhängt. Dies erfordert eine aufwendige mechanische werksseitige Kalibrierung der Hilfsvorrichtung; eine Neukalibrierung beim Kunden ist ebenfalls außerordentlich aufwendig bis unmöglich. Diese Hilfsvorrichtungen müssen somit mit höchster Präzision hergestellt werden und auch bei deren Handhabung, Wartung und Reinigung ist höchste Sorgfalt geboten.

Eine weitere bekannte Hilfsvorrichtung zur Feinjustierung eines Laserstrahls auf einen Zielpunkt ist in der US 4,483,618 beschrieben. Dabei handelt es sich wiederum um eine Hilfsvorrichtung mit Spiegel und Tastspitze, bei der anstelle eines Retroreflektors ein optischer Detektor in einem Spiegelpunkt der Tastspitze zur Spiegelebene angeordnet ist. Diese Hilfsvorrichtung findet in einem Laserdistanzmesssystem Verwendung, bei der ein den Laserstrahl um 90° zunächst auf einen ersten Zielpunkt ablenkendes Pentaprisma längs einer Achse so weit verschoben wird, bis der Laserstrahl auf einen zweiten Zielpunkt auftrifft. Die in einer bekannten Orientierung zum jeweiligen Zielpunkt ausgerichtete Hilfsvorrichtung dient dabei der Detektion, ob der Laserstrahl bereits hinreichend genau auf den gewünschten Zielpunkt ausgerichtet ist, an welchem die Tastspitze der gezeigten Vorrichtung angelegt ist. Die lineare Distanz zwischen erstem und zweitem Zielpunkt wird sodann aus der erfolgten Verschiebung des Pentaprismas ermittelt. Eine Anleitung wie eine etwaige Abweichung automatisch korrigiert werden könne ist nicht gegeben. Ferner weisen optische Detektoren, wie sie in der US 4,483,618 beschrieben sind, eine vergleichsweise kleine Fläche auf, so dass es einer außerordentlich präzisen Ausrichtung der Hilfsvorrichtung bedarf, um den dort gewünschten Messzweck zu erreichen. Schließlich absorbieren optische Detektoren, wie sie in der US 4,483,618 beschrieben sind, in der Regel einen so großen Teil des Laserlichtes, dass diese Hilfsvorrichtung weder mit einem Laserinterferometer noch mit einem anderen - eine diffuse Reflektion des Laserstrahls zum Zwecke der Distanzmessung auswertenden - Laserdistanzmessgerät zusammenwirken könnte.

Im Stand der Technik sind z.B. aus der US 2004/105087 A1, der EP 0439011 A2 und der DE 198 36 812 A1 verschiedene Laserdistanzmessgeräte bekannt, die auf dem Prinzip einer Laufzeitmessung eines lediglich diffus reflektierten Laserstrahls basieren und somit auch eine Distanzmessung zu Punkten auf einer natürlichen Oberfläche, wie z.B. einer bloßen Wand, ermöglichen. Solche Laserdistanzmessgeräte erfreuen sich aufgrund ihrer universellen Einsetzbarkeit und ihres kostengünstigen Aufbaus zunehmender Beliebtheit in den verschiedensten technischen Gebieten aus Industrie und Handwerk.

In der Regel wird hierbei der von dem Laserdistanzmessgeräte ausgesandte Laserstrahl mittels einer die Richtung des Laserstrahls vorgebenden Steuereinrichtung auf einen gewünschten Zielpunkt ausgerichtet und anschließend die gewünschte Distanzmessung zu dem Zielpunkt durchgeführt. Die - z.B. mittels einer Fernsteuerung ansteuerbare - Steuereinrichtung wirkt dabei auf einen Stellantrieb des Laserdistanzmessgeräts ein, welcher seinerseits auf geeignete Elemente (z.B. Spiegel, Prismen, etc) einwirkt, um die gewünschte Richtung des von dem Laserdistanzmessgerät ausgesandten Laserstrahls einzustellen. Bei einer Distanzmessung wird in der Regel gleichzeitig die durch die Steuereinrichtung bzw. den Stellantrieb vorgegebene Richtung des Laserstrahls gespeichert, so dass bei Vermessung einer Vielzahl an Zielpunkten deren räumliche Lage in einem dreidimensionalen Koordinatensystem abbildbar ist. Häufig wirkt der Stellantrieb eines solchen Laserdistanzmessgeräts auf genau zwei Elemente ein, mit denen die Richtung des aus dem Laserdistanzmessgerät austretenden Laserstrahls in zwei - häufig orthogonal zueinander orientierten - Achsen verstellt werden kann; es existieren insoweit jedoch die verschiedensten Stellantriebskonzepte und -geometrien.

Die Distanz zu einem bestimmten Zielpunkt wird dann von dem Laserdistanzmessgerät bestimmt, wenn der optisch sichtbare Laserpunkt mit hinreichender Genauigkeit auf dem Zielpunkt abgebildet ist.

Die - auch durch die Form und Größe des auf dem Zielpunkt abgebildeten Laserpunkts vorgegebene - Messgenauigkeit derartiger Laserdistanzmessgeräte reicht zwar nicht an diejenige von Laserinterferometern hin, ist jedoch mit Messgenauigkeiten im Bereich von ca. 2 mm oder kleiner für viele Anwendungen, insbesondere zu Vermessungszwecken im Bauwesen, noch ausreichend praxistauglich. Solche auf dem Prinzip der Auswertung einer diffusen Reflektion eines Laserstrahl basierenden Laserdistanzmessgeräte sind insbesondere in Umgebungen von großem Vorteil, wo die zu vermessenden Zielpunkte sich auf einer natürlichen Oberfläche befinden und - z.B. auf Grund ihrer Höhe, Entfernung oder räumlichen Anordnung - schwer zugänglich sind. Zumeist genügt die Grobausrichtung des Laserstrahls auf einen bestimmten Zielpunkt. Insbesondere auf Baustellen lassen sich hierbei mit vergleichsweise einfachem Aufwand gute Messergebnisse erzielen, wobei festgestellt sei, dass solche Laserdistanzmessgeräte einfacher Bauart über keine Einrichtung verfügen, mittels derer ein etwa von einem Retroreflektor zurückreflektierter Laserstrahl zu Zwecken der Feinjustierung genutzt werden könne. Laserdistanzmessgeräte dieser im Rahmen der vorliegenden Erfindung vornehmlich interessierenden Art weisen vielmehr lediglich eine - auch über externe Signale, z.B. von einer (Funk-)Fernsteuerung - steuerbare Steuereinrichtung auf, mittels derer über eine Einwirkung auf den Stellantrieb die Richtung des Laserstrahls - manuell oder automatisch - vorgegeben werden kann.

Auch bei den vorgenannten Laserdistanzmessgeräten ergibt sich jedoch die Problematik, dass bei bestimmten Zielpunkten (z.B. im Bereich von Kanten, Spitzen oder Vertiefungen) ohne weitere Hilfsmittel kein optimales Messergebnis erzielbar ist. Wünschenswert wäre es daher, auch für solche Laserdistanzmessgeräte, die nicht zur Zusammenwirkung mit einer einen Retroreflektor aufweisenden Justierhilfsvorrichtung eingerichtet sind, eine bedarfsweise einsetzbare Hilfsvorrichtung zur Feinjustierung des Laserstrahls auf einen vorgegebenen Zielpunkt bereitzustellen.

Weitere Hilfsvorrichtungen, die sich jedoch nicht in einfacher Weise zur (Fein-)Justierung eines von einem vorstehend erläuterten Laserdistanzmessgeräts ausgesandten Laserstrahls eignen, sind z.B. aus der US 2008/0043237 A1 und der EP 1 447 644 A1 bekannt.

Ausgehend von dem vorbeschriebenen Stand der Technik ist es somit die Aufgabe der vorliegenden Erfindung, eine möglichst einfach aufgebaute, einfach zu bedienende, praxistaugliche und kostengünstige Hilfsvorrichtung bereit zu stellen, welche mit einem über externe Stellsignale ansteuerbaren Laserdistanzmessgerät zur Feinjustierung des von diesem ausgesandten Laserstrahls auf einem Zielpunkt zusammenwirkt. Insbesondere ist hierbei an solche Laserdistanzmessgeräte gedacht, die - z.B. im Wege einer Laufzeitmessung - die Vermessung einer Längendistanz zu einer nur diffus reflektierenden Oberfläche erlauben, wobei die Erfindung nicht zwingend hierauf beschränkt ist.

Die vorstehend genannte Aufgabe wird mit einer Hilfsvorrichtung nach Anspruch 1 sowie einem Verfahren nach Anspruch 11 gelöst.

Die erfindungsgemäße Hilfsvorrichtung zur Feinjustierung eines von einem Laserdistanzmessgerät ausgesandten Laserstrahls auf einen Zielpunkt umfasst einen eine Spiegelebene definierenden Spiegel, eine auf einer ersten Seite der Spiegelebene und in einer vorgegebenen Normaldistanz hierzu angeordnete Tastspitze zur Anlage an dem Zielpunkt, eine auf der zweiten Seite der Spiegelebene angeordnete und diffus reflektierende Abbildungsfläche für einen an dem Spiegel reflektierten Laserstrahl, wobei die Abbildungsfläche einen virtuellen Zielpunkt beinhaltet, der dem Spiegelpunkt der Tastspitze an der Spiegelebene entspricht, eine optische Messvorrichtung zur Erzeugung eines die Lage eines Laserpunkts auf der Abbildungsfläche repräsentierenden Lagesignals, eine Justierelektronik und eine Signalübertragungseinrichtung zur Übermittlung eines Stellsignals an eine die Richtung des Laserstrahls vorgebende Steuereinrichtung des Laserdistanzmessgeräts. Dabei ist erfindungsgemäß ferner vorgesehen, dass die Justierelektronik dazu eingerichtet ist, aus dem Lagesignal ein Fehlersignal zu berechnen, welches die zweidimensionale Abweichung des auf der Abbildungsfläche abgebildeten Laserpunktes von dem virtuellen Zielpunkt repräsentiert. Ferner ist die Justierelektronik erfindungsgemäß dazu eingerichtet, in Abhängigkeit von dem vorgenannten Fehlersignal einen Korrekturalgorithmus zu starten, mit welchem geeignete Stellsignale für die Steuereinrichtung des Laserdistanzmessgeräts erzeugt und an diese übermittelt werden, um die Lage des Laserpunkts auf der Abbildungsfläche in Übereinstimmung mit der Lage des virtuellen Zielpunkts zu bringen, wobei der Korrekturalgorithmus ferner eine Raumzuordnungsroutine umfasst, mit welcher die räumliche Zuordnung zwischen einem gegebenen Fehlersignal und einem zu dessen Korrektur notwendigen Stellsignal hergestellt bzw. angepasst wird.

Die erfindungsgemäße Hilfsvorrichtung ist somit durch eine Mehrzahl an untereinander zusammenwirkenden technischen Merkmalen gekennzeichnet.

Zunächst sei darauf hingewiesen, dass erfindungsgemäß vorgesehen ist, dass die - einen virtuellen Zielpunkt (=Spiegelpunkt der Tastspitze zur Spiegelebene) beinhaltende - Abbildungsfläche diffus reflektiert, so dass die Hilfsvorrichtung mit einfachen und kostengünstigen Laserdistanzmessgeräten der weiter oben genannten Art zusammenwirken kann. Dies betrifft insbesondere solche Laserdistanzmessgeräte, die (z.B. basierend auf einer Laufzeitmessung) eine Längenmessung auf Basis der messgeräteseitig erfolgenden Detektion eines diffusen Streusignals an einer "normalen" Oberfläche erlauben. Ferner ist festzustellen, dass eine diffus reflektierende Abbildungsfläche die optische Bestimmung der Lage eines hierauf abgebildeten Laserpunktes (mittels der optischen Messvorrichtung) erlaubt, was bei bisher bekannten Hilfsvorrichtungen mit Retroreflektoren nicht möglich wäre. Denn auf einem Retroreflektor wird ein eingehenden Laserstrahl (ausschließlich) in die Einfallsrichtung zurückreflektiert, wodurch insbesondere die Lage des auf dem Reflektor auftreffenden Laserstrahls unter einem vom Einfallswinkel abweichenden Winkel erst gar nicht erkennbar ist.

Eine diffus reflektierende Abbildungsfläche kann im Übrigen auch in besonders kostengünstiger Weise großformatig (z.B. mit einer Grundfläche von größer gleich 3, 4, 5, 6, 7, 8 oder 9 cm²) hergestellt werden, was sich in Kombination mit einem entsprechend großformatigen Spiegel als außerordentlich vorteilhaft erweist. Denn die - zumeist manuell in den Strahlengang des Lasers gehaltene - Hilfsvorrichtung ist somit nicht besonders sensitiv im Hinblick auf ihre exakte Positionierung und Raumlage im Strahlengang des Laserstrahls, solange der Laserstrahl in ungefährer Ausrichtung zur Tastspitze auf den Spiegel der Hilfsvorrichtung fällt. Die Geometrie der Hilfsvorrichtung ist hierzu besonders bevorzugt auch so gewählt, dass der virtuelle Zielpunkt (im Wesentlichen oder exakt) im Zentrum der Abbildungsfläche liegt.

Tastspitze, Spiegel und Abbildungsfläche sind im Rahmen der vorliegenden Erfindung in an sich bekannter Weise derart lagefest zueinander angeordnet, dass ein in Richtung des Laserdistanzmessgeräts diffus zurückreflektiertes Lichtsignal eines im virtuellen Zielpunkt auf der Abbildungsfläche abgebildeten Laserpunktes insgesamt die gleiche Wegstrecke zurücklegt, wie dies bei einem am Ort der Tastspitze abgebildeten und dort reflektierten Laserstrahl der Fall wäre. Gleiches lässt sich zur Erzielung einer besonders kompakten Bauform für die Hilfsvorrichtung ersichtlich auch mit einer mehrfachen Spiegelung innerhalb der Hilfsvorrichtung und einer entsprechend geeigneten Anordnung der Abbildungsfläche realisieren, wobei zum Zwecke einer möglichst kostengünstigen und robusten Hilfsvorrichtung besonders bevorzugt auf genau einen Spiegel zurückgegriffen wird.

Ein auf dem Prinzip der Laufzeitmessung basierendes Laserdistanzmessgerät misst unter Zuhilfenahme einer erfindungsgemäßen Hilfsvorrichtung für den auf der Abbildungsfläche abgebildeten Laserpunkt die gleiche Entfernung und Raumlage, wie sie sich bei einer direkten (diffusen) Reflektion am Zielpunkt, dem die Tastspitze anliegt, ergäbe.

Ferner ist durch die erfindungsgemäße Justierelektronik, die zusammen mit der Signalübermittlungseinrichtung gewissermaßen eine Fernsteuerfunktion für die Stellantriebe des Laserdistanzmessgeräts bildet, sichergestellt, dass abhängig von der - mittels der optischen Messeinrichtung bestimmbaren - Lage des Laserpunktes auf der Abbildungsfläche bzw. abhängig von einer hierbei gemessenen Abweichung zwischen der tatsächlichen Lage des Laserpunkts und der Lage des virtuellen Zielpunkts ein zur Korrektur dieser Abweichung geeignetes Stellsignal erzeugt und an die Steuereinrichtung des Laserdistanzmessgeräts übermittelt werden kann. Hierzu wird im Rahmen der vorliegenden Erfindung zunächst aus dem Lagesignal ein die zweidimensionale Abweichung des Laserpunktes vom virtuellen Zielpunkt repräsentierendes Fehlersignal erzeugt.

Zu beachten ist außerdem, dass ein den Laserpunkt in Richtung des virtuellen Zielpunktes verschiebendes Stellsignal, welches im Rahmen des Korrekturalgorithmus zu berechnen ist, nur deshalb zuverlässig generiert werden kann, weil der von der Justierelektronik gestartete Korrekturalgorithmus erfindungsgemäß auch eine Raumzuordnungsroutine umfasst, mit welcher die räumliche Zuordnung zwischen dem Fehlersignal und dem zu dessen Korrektur erforderlichen Stellsignal hergestellt bzw. angepasst wird. So muss z.B. bei einem Laserdistanzmessgerät, dessen Stellantrieb eine Verschwenkung des Laserstrahls um zwei zueinander orthogonal liegende Achsen bewirken kann, jeder dieser zwei möglichen Stellrichtungen die sich hieraus jeweils ergebende Richtung der Verschiebung des Laserpunktes auf der Abbildungsfläche der Hilfsvorrichtung zugeordnet werden, die von der aktuellen relativen Raumlage von Hilfsvorrichtung und Laserdistanzmessgerät abhängig ist.

Das Arbeitsprinzip der erfindungsgemäßen Hilfsvorrichtung ist wie folgt zu beschreiben: Zunächst wird ein von dem Laserdistanzmessgerät ausgesandter Laserstrahl (z.B. mittels einer Fernsteuerung) grob in die Richtung eines gewünschten Zielpunktes ausgerichtet. Anschließend wird die Hilfsvorrichtung mit ihrem Spiegel in den Strahlengang des Laserstrahls gebracht, wobei der gewünschte Zielpunkt sodann durch die - an dem Zielpunkt anzulegende - Tastspitze der Hilfsvorrichtung definiert ist. Ersichtlich muss die Hilfsvorrichtung dabei so ausgerichtet sein, dass der Laserstrahl auf den Spiegel der Hilfsvorrichtung auftrifft und von dort auf die Abbildungsfläche abgebildet wird. Sodann wird mittels der optischen Messvorrichtung vollautomatisch ein Lagesignal erzeugt, welches die genaue Lage des auf der Abbildungsfläche abgebildeten Laserstrahls repräsentiert. Falls die Lage des Laserpunktes vom virtuellen Zielpunkt abweicht, so wird von der Justierelektronik zunächst ein Fehlersignal erzeugt, welches die zweidimensionale Abweichung der Lage des Laserpunktes vom virtuellen Zielpunkt repräsentiert und welches damit gleichzeitig ein Maß für die Abweichung des Laserstrahls vom (realen) Zielpunkt an der Tastspitze darstellt. Welches Stellsignal nun in Abhängigkeit von dem Fehlersignal an das Laserdistanzmessgerät übermittelt werden muss, um die bestehende Abweichung vom virtuellen Zielpunkt zu verringern, ist von der aktuell gegebenen Orientierung der Hilfsvorrichtung relativ zum Laserdistanzmessgerät (bzw. zu dessen Stellantrieb) abhängig. Eine entsprechende Raumzuordnung wird sodann mithilfe der Raumzuordnungsroutine hergestellt bzw., falls sich diese im Laufe der Zeit ändert, angepasst, so dass anschließend ein geeignetes Stellsignal erzeugt und an die Steuereinrichtung des Laserdistanzmessgerätes übermittelt werden kann. Durch eine erneute Lagemessung kann die übereinstimmende Lage von Laserpunkt und virtuellem Zielpunkt überprüft und bei einer ggfs. noch immer bestehenden Abweichung ein neues Stellsignal berechnet und übermittelt werden.

Von Vorteil ist es hierbei, wenn die Raumzuordnungsroutine einen Erstinitialisierungsprozess umfasst, der z.B. dann gestartet wird, wenn erstmals ein Laserpunkt auf der Abbildungsfläche erscheint. Bei diesem Erstinitialisierungsprozess kann durch - unabhängig vom aktuellen Fehlersignal - vorgebbare und an die Steuereinrichtung des Laserdistanzmessgeräts zu übermittelnde Stellsignale und einer anschließenden Bestimmung der sich hieraus für den Laserpunkt ergebenden Abweichung ein räumlicher Zusammenhang zwischen (verschiedenen) Stellsignalen und der sich hieraus tatsächlich ergebenden Verschiebung der Lage des Laserpunkts auf der Abbildungsfläche hergestellt werden. So ist dann einem bestimmten Fehlersignal ein bestimmtes zu dessen Korrektur notwendiges Fehlersignal zuordenbar. In der Praxis kann die Erstinitialisierung einer erfindungsgemäß implementierten Raumzuordnungsroutine also insbesondere unter Erzeugung und Übermittlung solcher Stellsignale realisiert sein, die eine - ggfs. oszillierende - Bewegung der Richtung des Laserstrahls in verschiedene Richtungen bewirkt. Anschließend erfolgt die Auswertung der sich hierdurch ergebenden Richtung (und Größe) der Verschiebung des Laserpunkts auf der Abbildungsfläche, womit die gewünschte Raumzuordnung herstellbar ist. Mit Laserdistanzmessgeräten üblicher Bauart kann eine solche Raumzuordnung in einer Zeitspanne von ca. 20 - 50 ms (oder schneller) durchgeführt werden.

Bei der Ermittlung eines zur Korrektur eines Fehlersignals notwendigen Stellsignals wird von einer Beibehaltung der - über die Raumzuordnungsroutine zuletzt ermittelten - relativen Orientierung zwischen Hilfsvorrichtung und Laserdistanzmessgerät bzw. der entsprechenden Verknüpfung von Fehler- und Stellsignal ausgegangen. Die durch den nachfolgenden Stellvorgang erfolgte Lageänderung des Laserpunktes auf der Abbildungsfläche wird sodann von der optischen Messeinrichtung unter Erzeugung eines neuen Lagesignals detektiert und von der Justierelektronik einem neuen Fehlersignal zugeordnet.

Wenn nun eine solchermaßen erfolgte Korrektur der Lage des Laserpunktes auf der Abbildungsfläche nicht exakt in die - aus der zuvor als aktuell ermittelten Raumzuordnung zwischen Stell- und Fehlersignal errechnete - Richtung erfolgt ist, so hat sich zwischenzeitlich die räumliche Orientierung zwischen - der z.B. an einem Handgriff gehaltenen - Hilfsvorrichtung und dem zumeist orts- und lagefest aufgestellten Laserdistanzmessgerät geändert. Einer erneuten Ausführung des Erstinitialisierungsprozesses der Raumzuordnungsroutine bedarf es in einem solchen Fall jedoch vorteilhaft nicht, da nun das zuletzt an die Steuereinrichtung des Laserdistanzmessgerätes übermittelte Stellsignal und die hierdurch ausgelöste Verschiebung des Laserpunktes auf der Abbildungsfläche bereits zum Zwecke der Korrektur der Raumzuordnung und der Erzeugung eines dem neuen Fehlersignal angepassten Stellsignals ausgewertet werden kann. Man kann hierbei von einem Adaptivmodus im Sinne einer im laufenden Betrieb der Hilfsvorrichtung erfolgenden adaptiven Nachregelung der - zur Berechnung geeigneter Stellsignale unerlässlichen - Raumzuordnungsroutine sprechen.

In einer alternativen Ausgestaltung kann die Raumzuordnungsroutine jedoch z.B. auch in der Auswertung zweier Raumlagesignale bestehen, die von zwei - an Hilfsvorrichtung und Laserdistanzmessgerät in bekannter Orientierung befestigten - Raumlagesensoren erzeugt werden. Im Rahmen der vorliegenden Erfindung wird somit eine Hilfsvorrichtung zur Laserdistanzmessung bereitgestellt, mit welcher der Nutzer einerseits auf kostengünstige Laserdistanzmessgeräte zurückgreifen kann, die ihm - ohne Verwendung der erfindungsgemäßen Hilfsvorrichtung - eine kontaktlose Vermessung entfernter oder schwer erreichbarer Zielpunkte auf natürlichen Oberflächen gestattet. Gleichzeitig besteht für den Nutzer jedoch die Option - unter Verwendung der erfindungsgemäßen Hilfsvorrichtung - den Laserstrahl unter Berührung des Zielpunkts mit der Tastspitze der Hilfsvorrichtung gezielt auf spezifische Zielpunkte auszurichten, z.B. wenn dies durch die Lage des Zielpunkts und/oder die Oberflächenbeschaffenheit am Zielpunkt nützlich oder erforderlich ist. Ein einfach erreichbarer Zielpunkt wird damit unter Anlage der Tastspitze an denselben für den Nutzer gewissermaßen greifbar. Die Ausrichtung des Laserstrahls auf den Zielpunkt ist maßgeblich erleichtert und mit höherer Präzision möglich.

Mit der vorliegenden Erfindung wird letztlich auch die Funktionalität eines einfachen Laserdistanzmessgeräts für diffus reflektierende Oberflächen gesteigert, da unter Einsatz der erfindungsgemäßen Hilfsvorrichtung mit dem Laserdistanzmessgerät nun auch solche Zielpunkte vermessbar sind, die ohne Einsatz der Hilfsvorrichtung entweder gar nicht (z.B. im Falle einer schwarzen bzw. unzureichend reflektierenden Oberfläche) oder nur ungenau (z.B. Zielpunkte im Bereich von Kanten, Erhebungen oder Senken) vermessbar waren.

In einer ersten bevorzugten Weiterbildung der vorliegenden Erfindung ist vorgesehen, dass die Abbildungsfläche parallel zur Spiegelebene orientiert ist und die gleiche Normaldistanz zur Spiegelebene wie die Spiegelebene zur Tastspitze aufweist, was u.a. einen besonders kompakten Aufbau der erfindungsgemäßen Hilfsvorrichtung gestattet.

Weiterhin ist einer vorteilhaften Weiterbildung der Erfindung vorgesehen, dass die Abbildungsfläche eine Mattscheibe ist, auf der ein auftreffender Laserstrahl eines Laserdistanzmessgeräts als Laserpunkt sichtbar ist. Die Lage eines auf einer solchen Mattscheibe abgebildeten Laserpunktes ist besonders einfach optisch zu vermessen, was im Falle einer halbtransparenten Mattscheibe sogar von beiden Seiten der Mattscheibe möglich ist. Abhängig von der konkreten Geometrie der Hilfsvorrichtung kann es sich somit anbieten eine - zur Erfassung der Lage eines Laserpunktes auf der Mattscheibe - geeignete optische Messvorrichtung entweder vor oder hinter der Mattscheibe anzuordnen.

Ferner ist bevorzugt vorgesehen, dass die optische Messvorrichtung eine beabstandet zur Mattscheibe angeordnete und auf diese ausgerichtete CCD-Kamera umfasst, die ein das Lagesignal darstellendes Videosignal erzeugt. CCD-Kameras mit einer für den vorliegenden Zweck hinreichenden optischen und zeitlichen Auflösung, sind mittlerweile bereits zu außerordentlich günstigen Preisen erhältlich, womit sich die Kosten für eine erfindungsgemäße Hilfsvorrichtung insgesamt niedrig halten lassen können. Zur Erzielung eines möglichst optimalen Lagesignals bietet es sich an, die CCD-Kamera so auszurichten und anzuordnen, dass ihre optische Achse senkrecht auf der Abbildungsfläche steht und dort vorteilhaft auch den virtuellen Zielpunkt schneidet.

Weiterhin ist im Rahmen einer Weiterbildung der vorliegenden Erfindung in vorteilhafter Weise vorgesehen, dass in der Auswerteelektronik ein zweidimensionales Koordinatensystem für die (bevorzugt ebene) Abbildungsfläche vorgegeben ist, wobei das Fehlersignal die Abweichung der Koordinaten des Zentrums eines auf der Abbildungsfläche abgebildeten Laserpunkts von den Koordinaten des virtuellen Zielpunkts darstellt. Aus dem Lagesignal (z.B. dem Bild einer CCD-Kamera) wird somit unter Zuhilfenahme der Justierelektronik zunächst die Lage des Laserpunkts bestimmt, indem aus der Bildinformation - unter Zuhilfenahme üblicher Algorithmen - das Zentrum des im Wesentlichen eine Kreisfläche darstellenden Laserpunkts bestimmt wird, womit sich eine besonders gute Messgenauigkeit erzielen lässt. Das zweidimensionale Fehlersignal kann dann als Grundalge zur Ermittlung des zu dessen Korrektur erforderlichen Stellsignals verwendet werden. Zur Berechnung bzw. Erzeugung des Stellsignals bedarf es - um nicht nur die notwendige Verstellrichtung für den Stellantrieb, sondern auch die erforderliche Größe des benötigten Stellsignals zu berechnen - außerdem einer Information zur Distanz zwischen Laserdistanzmessgerät und Tastspitze. Diese - aus Vormessungen bekannte - Distanz kann z.B. durch eine Signalübermittlungseinheit des Laserdistanzmessgeräts an die Justierelektronik der Hilfsvorrichtung übermittelt werden. Der benötigte Zusammenhang ist jedoch, falls das Laserdistanzmessgerät nicht zur Ausgabe der ermittelten Distanz eingerichtet ist, auch aus einer zuvor ausgeführten Raumzuordnungsroutine bekannt, da im Rahmen der Raumzuordnungsroutine nicht nur eine Verknüpfung des Fehlersignals mit der Richtung eines zu dessen Korrektur erforderlichen Stellsignals, sondern auch die zu Lagekorrekturzwecken - und möglicherweise richtungsabhängige - Amplitude des benötigten Stellsignals ermittelbar sind.

In einer nochmals bevorzugten Weiterbildung der vorliegenden Erfindung ist dann vorgesehen, dass die Koordinaten des virtuellen Zielpunkts durch einen Kalibrierungsvorgang vorgegeben sind. Ersichtlich kann es sich hierbei um eine werksseitige Kalibrierung handeln, bei der unter Anlage der Tastspitze an einen Zielpunkt, auf den bereits ein Laserstrahl optimal ausgerichtet ist, die Koordinaten des virtuellen Zielpunktes durch die tatsächliche Lage des Laserpunktes auf der Abbildungsfläche bestimmt werden. Ein solcher Kalibrierungsvorgang kann in ebenso einfacher Weise von einem Kunden wiederholt bzw. erneut durchgeführt werden.

Ferner kann nach einem solchen Kalibrierungsvorgang bevorzugt auch mittels zweier Distanzmessungen (werks- oder kundenseitig) in einfacher Weise überprüft werden, ob die durch die Geometrie der Hilfsvorrichtung vorgegebene Relativlage zwischen Tastspitze, Spiegel und Abbildungsfläche (noch) optimal ist. Hierzu wird z.B. zunächst ohne Einsatz der Hilfsvorrichtung eine Distanzmessung zu einem bestimmten Zielpunkt mit dem Laserdistanzmessgerät durchgeführt und anschließend die Hilfsvorrichtung mit ihrer Tastspitze an den Zielpunkt angelegt und die Distanzmessung wiederholt. Ergibt sich hierbei ein (unerwünschter) Unterschied, so kann dieser z.B. durch einen Austausch einer möglicherweise abgenutzten Tastspitze oder eine Neupositionierung einer hierfür vorteilhaft lageveränderbar montierten oder längenveränderbaren Tastspitze ausgeglichen werden. Auch eine Veränderung der Lage des Spiegels und/oder der Abbildungsfläche kommt in Betracht, sofern die Hilfsvorrichtung entsprechend eingerichtet ist. Anschließend sollte dann jedoch bevorzugt eine erneute Kalibrierung der Lage des virtuellen Zielpunkts erfolgen. Die zu den vorgenannten Kalibrierungszwecken erforderlichen Schritte sind aufgrund des Aufbaus und der Funktionsweise der erfindungsgemäßen Hilfsvorrichtung so einfach, dass sie problemlos kundenseitig durchführbar sind.

Weiterhin ist im Rahmen der vorliegenden Erfindung bevorzugt vorgesehen, dass der Korrekturalgorithmus zur kontinuierlichen Nachregelung des Laserstrahls auf den virtuellen Zielpunkt eingerichtet ist, so dass der Laserstrahl des Laserdistanzmessgeräts einer räumlichen Verschiebung der Tastspitze folgt. Durch eine solche iterative Wiederholung des Korrekturalgorithmus kann somit erstmals auch für Laserdistanzmessgeräte einfacher Bauart ein einer Bewegung einer Hilfsvorrichtung folgendes "Laser-Tracking-System" bereitgestellt werden, was bisher nur im Bereich teuerer Laserinterferometer mit einer lasermessgeräteseitig integrierten Nachführeinheit unter Zuhilfenahme einer einen Retroreflektor aufweisenden Hilfsvorrichtung bekannt war.

Ferner ist bevorzugt vorgesehen, dass die Signalübertragungseinrichtung zur Herstellung einer drahtlosen Kommunikation mit der Steuereinrichtung des Laserdistanzmessgeräts eingerichtet ist, so dass die Justierelektronik zum Zecke der Feinjustierung eines Laserstrahls als Funkfernsteuerung auf das Laserdistanzmessgerät einwirken kann. Es sei jedoch angemerkt, dass es zwar vorteilhaft, indessen nicht zwingend erforderlich ist, dass sämtliche Elemente der vorliegenden Hilfsvorrichtung innerhalb ein und desselben Gehäuses angeordnet sein müssen. Vielmehr ist auch an eine Variante zu denken, bei der die eigentliche Lagemessung des abgebildeten Laserpunktes mittels eines ersten, ein separates Gehäuse aufweisenden Vorrichtungselements stattfindet während die Justierelektronik samt Signalübertragungseinrichtung in einem zweiten, wiederum ein separates (mit geeigneten Bedien- und Anzeigeelementen versehenes) Gehäuse aufweisenden Vorrichtungselement angeordnet sind, wobei das Lagesignal vom ersten zum zweiten Vorrichtungselement unter Zuhilfenahme geeigneter Signalübertragungseinrichtungen - kabellos oder kabelgebunden - übertragen wird. Hierdurch kann das an den Zielpunkt anzulegende erste Vorrichtungselement der erfindungsgemäßen Hilfsvorrichtung handlicher und leichter gestaltet sein.

Die vorliegende Erfindung ist nicht ausschließlich auf die Hilfsvorrichtung als solche, sondern insbesondere auch auf ein System aus einem Laserdistanzmessgerät und einer Hilfsvorrichtung der vorstehend erläuterten Art gerichtet. Es versteht sich von selbst, dass alle vorgenannten Aspekte der vorliegenden Erfindung auch für ein solches System gelten, so dass in Übereinstimmung mit dem vorstehend erläuterten Erfindungskonzept insbesondere bevorzugt auch vorgesehen ist, dass das Laserdistanzmessgerät auf dem Prinzip der Laufzeitmessung eines an einer diffus reflektierenden Oberfläche reflektierten Laserstrahls basiert. Sämtliche vorstehend zu diesem Laserdistanzmessgerätetyp getroffen Aussagen und vorteilhaften Weiterbildungen desselben sind also als erfindungszugehörig anzusehen.

Schließlich betrifft die vorliegende Erfindung noch ein Verfahren zur Feinjustierung eines von einem Laserdistanzmessgerät ausgesandten Laserstrahls auf einen Zielpunkt unter Verwendung eines Systems der vorstehend genannten Art, welches die folgenden Schritte umfasst:
A) Grobausrichten des Laserstrahls in Richtung des Zielpunkts,
B) Anlegen der Tastspitze der Hilfsvorrichtung an einen Zielpunkt derart, dass der Laserstrahl auf den Spiegel der Hilfsvorrichtung trifft,
C) Bestimmen des die Lage des Laserpunkts auf der Abbildungsfläche repräsentierenden Lagesignals mit der optischen Messvorrichtung
D) Berechnen des die Abweichung des Laserpunkts vom virtuellen Zielpunkt repräsentierenden Fehlersignals durch die Justierelektronik
E) Starten des Korrekturalgorithmus
F) Berechnen eines zur Korrektur der Abweichung geeigneten Stellsignals für die Steuereinrichtung des Laserdistanzmessgeräts
G) Übermitteln des Stellsignals durch die Signalübermittlungseinrichtung
H) Neuausrichten des Laserstrahls gemäß dem übermittelten Stellsignal
I) Wiederholen der Schritte C) - H), wenigstens solange eine Abweichung zwischen der Lage des Laserpunkts auf der Abbildungsfläche und der Lage des virtuellen Zielpunkts besteht,
wobei bei der Berechnung der Stellsignale für die Steuereinrichtung gemäß Schritt F) eine Raumzuordnungsroutine ausgeführt wird, um die räumliche Zuordnung zwischen einem Fehlersignal und einem zu dessen Korrektur notwendigen Stellsignal herzustellen bzw. anzupassen.

Ersichtlich gelten sämtliche die Hilfsvorrichtung beschriebenen Vorteile und Weiterbildungen auch für das vorstehend beschriebene Verfahren, so dass auch insoweit auf die vorstehenden Ausführungen verwiesen werden darf.

Nachfolgend wird noch ein Ausführungsbeispiel der vorliegenden Erfindung anhand der Zeichnung näher erläutert. Dabei zeigt
- Fig. 1: eine dreidimensionale Ansicht eines erfindungsgemäßen Systems bestehend aus einem Laserdistanzmessgerät und einer erfindungsgemäßen Hilfsvorrichtung,
- Fig. 2: eine dreidimensionale Detaildarstellung des die Tastspitze und Abbildungsoptik inkl. optischer Messeinrichtung beinhaltenden Elements der Hilfsvorrichtung aus Fig. 1,
- Fig. 3: eine weitere Darstellung des Vorrichtungselements aus Fig. 2,
- Fig. 4: eine Schnittdarstellung durch das Vorrichtungselement gemäß Schnitt A-A aus Fig. 3 und
- Fig. 5: ein Flussdiagramm zu dem erfindungsgemäßen Verfahren.

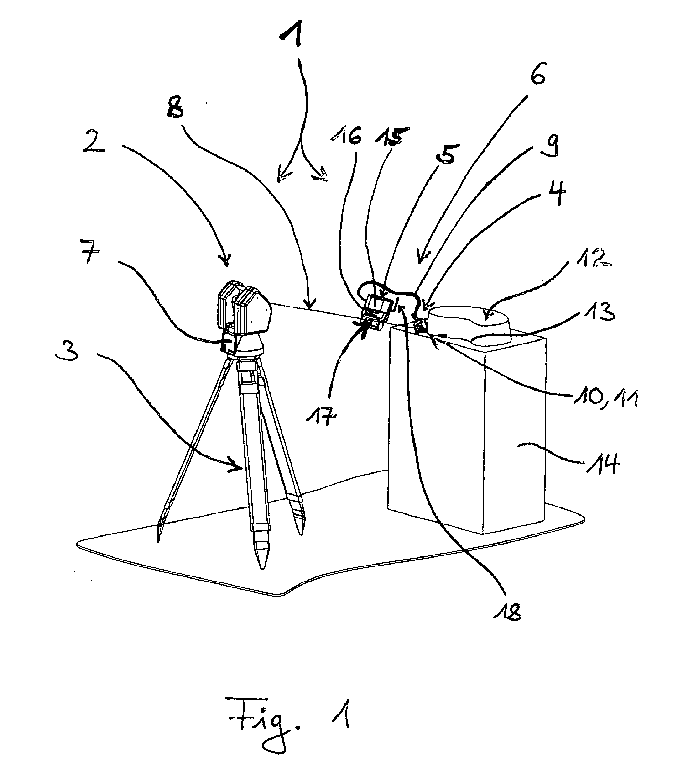

Fig. 1 zeigt ein System 1 aus einem Laserdistanzmessgerät 2 üblicher Bauart, welches auf einem Dreibein 3 ortsfest aufgestellt ist, und einer - aus zwei Vorrichtungselementen 4, 5 bestehenden - Hilfsvorrichtung 6. Das Laserdistanzmessgerät 2 weist eine Steuereinrichtung 7 auf, welche zum Empfang drahtlos übermittelter Stellsignale eingerichtet ist und mit welcher - unter Einwirkung auf einen nicht dargestellten Stellantrieb innerhalb des Laserdistanzmessgeräts 2 - die Richtung eines von dem Laserdistanzmessgerät 2 ausgesandten Laserstrahls 8 über einen beinahe den gesamten Raum überspannenden Raumwinkelbereich verändert werden kann.

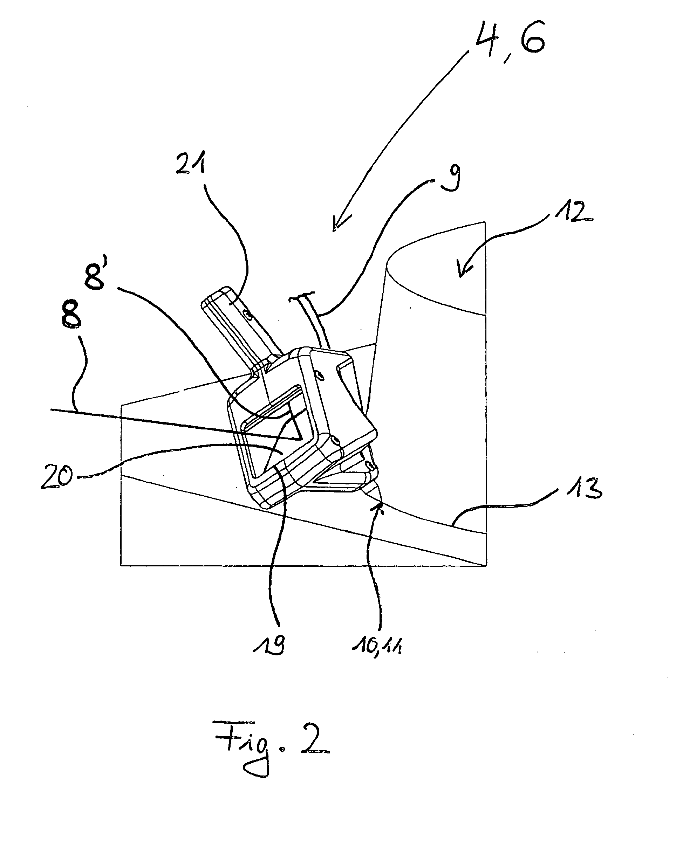

Die beiden als separate Bauteile mit eigenem Gehäuse ausgestalteten Vorrichtungselemente 4, 5 sind über ein Kabel 9 untereinander verbunden. Das erste Vorrichtungselement 4, welches nachfolgend anhand der Figuren 2 - 4 noch näher erläutert wird, weist u.a. eine Tastspitze 10 auf, mit welcher es einem zu vermessenden Zielpunkt 11, in dessen Richtung auch bereits der Laserstrahl 8 grob ausgerichtet ist, anliegt. Der Zielpunkt 11 liegt vorliegend im Bereich einer einen Vorsprung 12 umrundenden Kante 13 eines im Hinblick auf eine Vielzahl von Zielpunkten zu vermessenden Bauteils 14.

Das zweite Vorrichtungselement 5 der Hilfsvorrichtung 6 umfasst neben einem Display 15 und geeigneten Bedienelementen 16 auch eine Justierelektronik 17, welche zur Berechnung eines zweidimensionalen Fehlersignals (unter Berücksichtigung eines von dem ersten Vorrichtungselement 4 der Hilfsvorrichtung 6 über das Kabel 9 übermittelten Lagesignals) sowie eines Stellsignals für die Steuereinrichtung 7 des Laserdistanzmessgeräts 2 eingerichtet ist. Hierzu wird ein geeigneter Korrekturalgorithmus ausgeführt um unter Berücksichtigung des Ergebnisses der bereits zuvor beschriebenen Raumzuordnungsroutine zumindest ein geeignetes Stellsignal zu erzeugen, mit welchem eine von der Sollrichtung auf den Zielpunkt 11 abweichende Ausrichtung des Laserstrahls 8 korrigierbar ist.

Jedes von der Justierelektronik 17 ermittelte Stellsignal wird mittels einer Signalübertragungseinrichtung 18 drahtlos an die Steuereinrichtung 7 des Laserdistanzmessgeräts 2 übermittelt, welche sodann entsprechend auf den Stellantrieb zur Änderung der Richtung des Laserstrahls 8 einwirkt.

Fig. 2 zeigt das Vorrichtungselement 4 der Hilfsvorrichtung 6 in einer detailreicheren Darstellung. gut erkennbar ist die Tastspitze 10, die einem exakt auf der Kante 13 des Vorsprungs 12 liegenden Zielpunkt 11 anliegt. Die Hilfsvorrichtung 6 bzw. das Vorrichtungselemente 4 ist vorliegend derart im Strahlengang des Laserstrahls 8 angeordnet, dass der Laserstrahl 8 durch eine - ggfs. mittels einer durchsichtigen Glasscheibe abgedeckten - Gehäuseöffnung 19 auf einen Spiegel 20 auftrifft, von wo aus der reflektierte Laserstrahl 8' zu einer in Fig. 2 nicht erkennbaren Mattscheibe, die eine Abbildungsfläche für den (reflektierten) Laserstrahl 8, 8' darstellt, reflektiert wird. Das Vorrichtungselement 4 weist ferner einen Handgriff 21 auf, der derart angeordnet ist, dass das mit seiner Tastspitze 10 am Zielpunkt 11 anzulegende Vorrichtungselement 4 einfach gegriffen und dabei ohne Behinderung des Laserstrahl 8 so positioniert werden kann, dass ein in etwa in Richtung der Tastspitze 10 weisender Laserstrahl 8 durch die Gehäuseöffnung 19 auf den Spiegel 20 auftreffen kann.

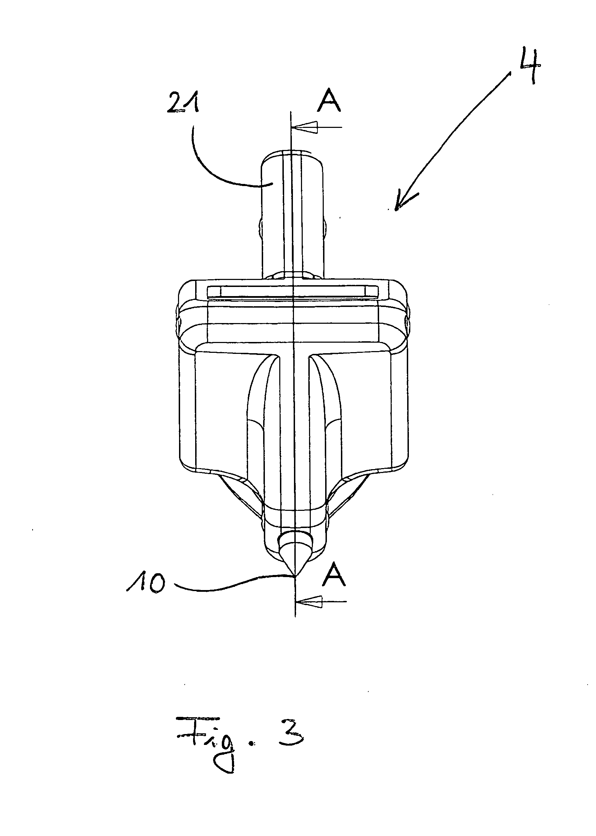

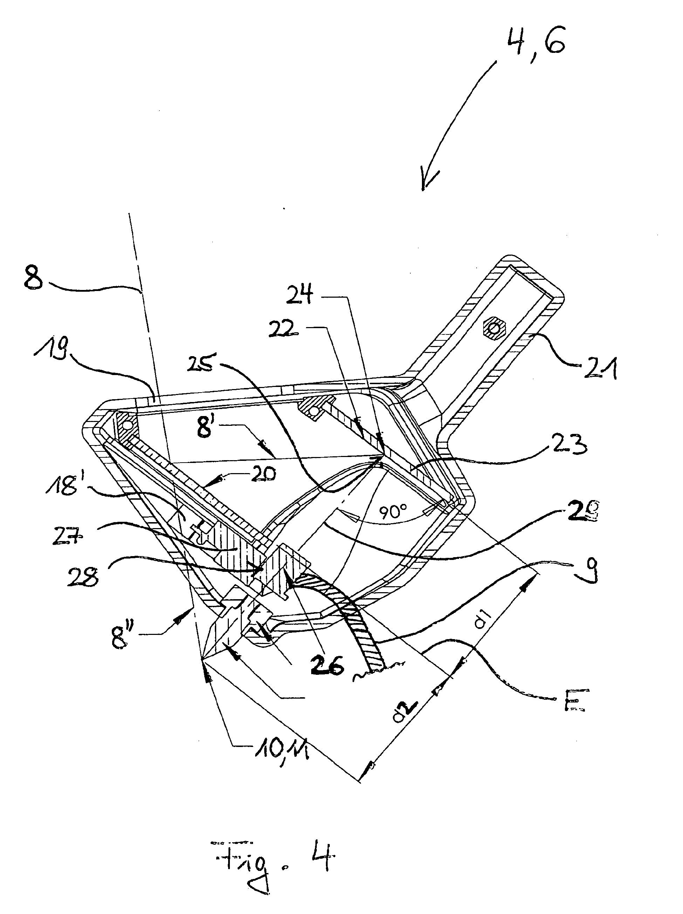

Fig. 3 zeigt eine weitere Ansicht des Vorrichtungselements 4 zum Zwecke der Verdeutlichung der Schnittebene der in Fig. 4 dargestellten Schnittzeichnung.

Fig. 4 zeigt den Schnitt durch das Vorrichtungselement 4 der Hilfsvorrichtung 6 gemäß Ebene A-A aus Fig. 3, bei welchem der durch die Gehäuseöffnung 19 auf den Spiegel 20 auftreffende Laserstrahl 8 bereits optimal auf einen an der Tastspitze 10 gelegenen Zielpunkt 11 ausgerichtet ist, wie dies durch die gedachte geradlinige Fortführung 8" des Laserstrahls 8 gezeigt ist.

Der Laserstrahl 8, 8' wird an dem eine Spiegelebene E definierenden Spiegel 20 reflektiert und auf eine diffus reflektierende Mattscheibe 23 abgebildet, die parallel zur Spiegelebene E ausgerichtet ist und eine Abbildungsfläche 22 für den am Spiegel 20 reflektierten Laserstrahl 8, 8' bildet. Die Abbildungsfläche 22 weist in dem gezeigten Ausführungsbeispiel einen quadratischen Querschnitt der Größe 3x3 cm auf. Die Normaldistanz d1 zwischen Abbildungsfläche 22 und Spiegel 20 und die Normaldistanz d2 zwischen Spiegelebene E und Tastspitze 10 entsprechen einander, d.h. es gilt d1=d2.

Da der Laserstrahl 8 vorliegend perfekt in Richtung des Zielpunktes 11 ausgerichtet ist, trifft er somit auf der Abbildungsfläche 22 exakt an dem virtuellen Zielpunkt 24 auf, der dem Spiegelpunkt der Tastspitze 10 (bzw. dem Spiegelpunkt des sich an diesem Ort befindlichen Zielpunkts 11) zur Spiegelebene E entspricht. Diese mit dem virtuellen Zielpunkt 24 übereinstimmende Lage des Zentrums des auf der Abbildungsfläche 22 abgebildeten Laserpunkts 25 besteht unabhängig von einer etwaigen Verkippung oder Drehung des Vorrichtungselements 4 um eine durch die Tastspitze 10 gehende Achse. Die am Griff 21 zu haltende Hilfsvorrichtung 6 bzw. das Vorrichtungselement 4 ist besonders einfach handhabbar und vor allem in Anbetracht der Größe der Gehäuseöffnung 19, des Spiegels 20 sowie der - kostengünstig herstellbaren - diffus reflektierenden Abbildungsfläche 23 außerordentlich tolerant gegenüber einer nicht besonders präzisen Ausrichtung der Hilfsvorrichtung zum Lasermessgerät.

Seitlich des Spiegels 20 ist eine eine CCD-Kamera 26 mit Datenverarbeitungselektronik 27 umfassende optische Messvorrichtung 28 mit Blickrichtung auf die den Laserstrahl 8, 8' - unter Abbildung eines Laserpunktes 25 - diffus reflektierende Mattscheibe 23 angeordnet. Das von der CCD-Kamera 26 erfasste Videosignal, welches die Lage des Laserpunkts 25 auf der Mattscheibe 23 repräsentiert, wird von einer Signalübertragungseinrichtung 18' des Vorrichtungselements 4 über das Kabel 9 an die Justierelektronik 17 des in Fig. 1 dargestellten Vorrichtungselements 5 übertragen, wo es zur Erzeugung geeigneter Stellsignale für das Laserdistanzmessgerät 2 weiterverarbeitet wird.

Der Laserpunkt 25 sollte sich ersichtlich mit ausreichendem Kontrast auf der Abbildungsfläche 22 abzeichnen, was durch eine geeignete Wahl der - bevorzugt im sichtbaren Lichtspektrum liegenden - Wellenlänge des Laserstrahls 8, 8' sowie der Farbe und Oberflächenbeschaffenheit der Mattscheibe 23 sichergestellt werden kann.

Die optische Achse 27 der CCD-Kamera 26 steht senkrecht auf der Abbildungsfläche 22 und schneidet diese in dem - im Zentrum der Abbildungsfläche 22 liegenden - virtuellen Zielpunkt 24. Dadurch ist der gesamte Bereich der Abbildungsfläche 22 aus einer möglichst lotrechten Lage zu dieser abbildbar.

Es sei schließlich noch darauf hingewiesen, dass die Funktionalität der in dem separaten Vorrichtungselement 5 angeordneten Justierelektronik 17 (vgl. Fig. 1) gleichermaßen auch bereits in der Auswerteelektronik 27 des Vorrichtungselements 4 implementiert sein kann, so dass in diesem Fall das Vorrichtungselement 4 bereits die gesamte Hilfsvorrichtung 6 darstellen könnte, wenn die Signalübermittlungseinrichtung 18' zur Ausgabe geeigneter Stellsignale an das Laserdistanzmessgerät 2 eingerichtet ist. Dies könnte entweder im Wege einer kabelgebunden Signalübertragung mittels des Kabels 9 oder - unter Weglassung des Kabels 9 - auch drahtlos erfolgen.

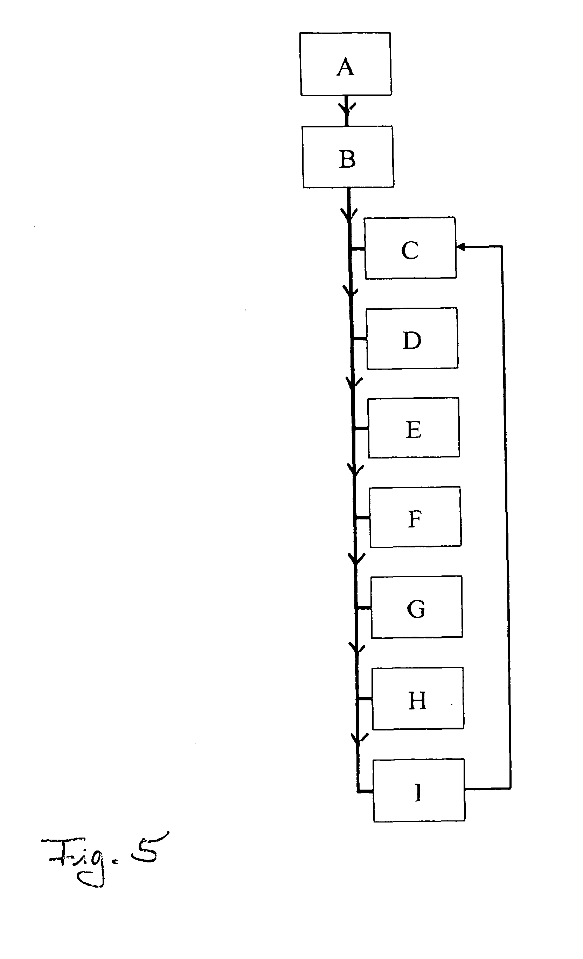

Fig. 5 zeigt schließlich ein Diagramm des erfindungsgemäßen Verfahrens, welches mit dem in den Fig. 1 - 4 dargestellten Ausführungsbeispiel der Erfindung durchführbar ist. Die Verfahrensschritte A bis I werden bevorzugt in der durch die Pfeile veranschaulichten Reihenfolge abgearbeitet, wobei nach Abschluss des Verfahrensschrittes I das Verfahren erneut bei dem die Erzeugung des Lagesignals betreffenden Schritt C fortgesetzt wird. Falls sich im Schritt D herausstellt, dass die Lage von Laserpunkt 25 und virtuellem Zielpunkt 24 mit hinreichender, d.h. vorgebbarer Genauigkeit übereinstimmen, so kann das Verfahren unter Rücksprung auf Schritt C ggfs. solange fortgesetzt werden, bis durch eine Verschiebung der erfindungsgemäßen Hilfsvorrichtung 4 samt Tastspitze 10 ein - eine Abweichung anzeigendes - Fehlersignal festgestellt wird. Zu den einzelnen Verfahrensschritten A - I sei auf die weiter oben stehenden Ausführungen verwiesen.

## Patentansprüche

1. Hilfsvorrichtung (4,5,6) zur Feinjustierung eines von einem Laserdistanzmessgerät (2) ausgesandten Laserstrahls (8) auf einen Zielpunkt umfassend
- einen eine Spiegelebene (E) definierenden Spiegel (20),
- eine auf einer ersten Seite der Spiegelebene (E) und in einer vorgegebenen Normaldistanz (d2) hierzu angeordnete Tastspitze (10) zur Anlage an dem Zielpunkt (11),
- eine auf der zweiten Seite der Spiegelebene (E) angeordnete und diffus reflektierende Abbildungsfläche (22) für einen an dem Spiegel (20) reflektierten Laserstrahl (8'), wobei die Abbildungsfläche (22) einen virtuellen Zielpunkt (24) beinhaltet, der dem Spiegelpunkt der Tastspitze (10) an der Spiegelebene (E) entspricht,
- eine optische Messvorrichtung (26,27,28) zur Erzeugung eines die Lage eines Laserpunkts (25) auf der Abbildungsfläche (22) repräsentierenden Lagesignals,
- eine Justierelektronik (17) und
- eine Signalübertragungseinrichtung (18) zur Übermittlung eines Stellsignals an eine die Richtung des Laserstrahls (8) vorgebende Steuereinrichtung (7) des Laserdistanzmessgeräts (2),
wobei die Justierelektronik (17) dazu eingerichtet ist, aus dem Lagesignal ein Fehlersignal zu berechnen, welches die zweidimensionale Abweichung des Laserpunktes (25) von dem virtuellen Zielpunkt (24) repräsentiert, und in Abhängigkeit von dem vorgenannten Fehlersignal einen Korrekturalgorithmus zu starten, mit welchem geeignete Stellsignale für die Steuereinrichtung (7) des Laserdistanzmessgeräts (2) erzeugt und an diese übermittelt werden, um die Lage des Laserpunkts (25) auf der Abbildungsfläche (22) in Übereinstimmung mit der Lage des virtuellen Zielpunkts (24) zu bringen,
wobei der Korrekturalgorithmus ferner eine Raumzuordnungsroutine umfasst, mit welcher die räumliche Zuordnung zwischen einem gegebenen Fehlersignal und einem zu dessen Korrektur notwendigen Stellsignal hergestellt bzw. angepasst wird.

2. Hilfsvorrichtung nach Anspruch 1,
**dadurch gekennzeichnet**,
dass die Abbildungsfläche (22) parallel zur Spiegelebene (E) orientiert ist und die gleiche Normaldistanz (d1) zur Spiegelebene (E) wie die Spiegelebene (E) zur Tastspitze (10) aufweist.

3. Hilfsvorrichtung nach Anspruch 1 oder Anspruch 2,
**dadurch gekennzeichnet**,
dass die Abbildungsfläche (22) eine Mattscheibe (23) ist, auf der ein auftreffender Laserstrahl (8') eines Laserdistanzmessgeräts (2) als Laserpunkt (25) sichtbar ist.

4. Hilfsvorrichtung nach Anspruch 3,
**dadurch gekennzeichnet**,
dass die Messvorrichtung (26,27,28) eine beabstandet zur Mattscheibe (23) angeordnete und auf diese ausgerichtete CCD-Kamera (26) umfasst, die ein das Lagesignal darstellendes Videosignal erzeugt.

5. Hilfsvorrichtung nach einem der vorangehenden Ansprüche,
**dadurch gekennzeichnet**,
dass in der Justierelektronik (27) ein zweidimensionales Koordinatensystem für die Abbildungsfläche (22) vorgegeben ist, wobei das Fehlersignal die Abweichung der Koordinaten des Zentrums eines auf der Abbildungsfläche (22) abgebildeten Laserpunkts (25) von den Koordinaten des virtuellen Zielpunkts (24) darstellt.

6. Hilfsvorrichtung nach Anspruch 5,
**dadurch gekennzeichnet**,
dass die Koordinaten des virtuellen Zielpunkts (24) durch einen Kalibrierungsvorgang vorgegeben sind.

7. Hilfsvorrichtung nach einem der vorangehenden Patentansprüche,
**dadurch gekennzeichnet**,
dass der Korrekturalgorithmus zur kontinuierlichen Nachregelung des Laserstrahls (8,8') auf den virtuellen Zielpunkt (24) eingerichtet ist, so dass der Laserstrahl (8,8') des Laserdistanzmessgeräts (2) einer räumlichen Verschiebung der Tastspitze (10) folgt.

8. Hilfsvorrichtung nach einem der vorangehenden Patentansprüche,
**dadurch gekennzeichnet**,
dass die Signalübertragungseinrichtung (17) zur Herstellung einer drahtlosen Kommunikation mit der Steuereinrichtung (7) des Laserdistanzmessgeräts (2) eingerichtet ist.

9. System aus einem Laserdistanzmessgerät (2) und einer Hilfsvorrichtung (4,5,6) nach einem der vorstehenden Patentansprüche.

10. System nach Anspruch 9,
**dadurch gekennzeichnet**,
dass das Laserdistanzmessgerät (2) auf dem Prinzip der Laufzeitmessung eines an einer diffus reflektierenden Oberfläche reflektierten Laserstrahls (8,8') basiert.

11. Verfahren zur Feinjustierung eines von einem Laserdistanzmessgerät (2) ausgesandten Laserstrahls (8) auf einen Zielpunkt unter Verwendung eines Systems nach Anspruch 10 umfassend die folgenden Schritte:
A) Grobausrichten des Laserstrahls (8) in Richtung des Zielpunkts,
B) Anlegen der Tastspitze (10) der Hilfsvorrichtung (4,5,6) an einen Zielpunkt (11) derart, dass der Laserstrahl (8) auf den Spiegel (20) der Hilfsvorrichtung (4,5,6) trifft,
C) Bestimmen des die Lage des Laserpunkts (25) auf der Abbildungsfläche (22) repräsentierenden Lagesignals mit der optischen Messvorrichtung (26,27,28)
D) Berechnen des die Abweichung des Laserpunkts (25) vom virtuellen Zielpunkt (24) repräsentierenden Fehlersignals durch die Justierelektronik (17)
E) Starten des Korrekturalgorithmus
F) Berechnen eines zur Korrektur der Abweichung geeigneten Stellsignals für die Steuereinrichtung (7) des Laserdistanzmessgeräts (2)
G) Übermitteln des Stellsignals durch die Signalübermittlungseinrichtung (17)
H) Neuausrichten des Laserstrahls (8) gemäß dem übermittelten Stellsignal
I) Wiederholen der Schritte C) - H), wenigstens solange eine Abweichung zwischen der Lage des Laserpunkts (25) auf der Abbildungsfläche (22) und der Lage des virtuellen Zielpunkts (24) besteht,
wobei bei der Berechnung der Stellsignale für die Steuereinrichtung (7) gemäß Schritt F) eine Raumzuordnungsroutine ausgeführt wird, um die räumliche Zuordnung zwischen einem Fehlersignal und einem zu dessen Korrektur notwendigen Stellsignal herzustellen bzw. anzupassen.

## Claims

1. An auxiliary device (4, 5, 6) for the fine adjustment of a laser beam (8) emitted by a laser distance measuring device (2) onto a target point, comprising
- a mirror (20) defining a mirror plane (E)
- a probe tip (10) for making contact at the target point (11), said probe tip being disposed on a first side of the mirror plane (E) and at a preset normal distance (d2) with respect thereto,
- a diffuse-reflecting imaging surface (22) for a laser beam (8') reflected at the mirror (20), said imaging surface being disposed on the second side of the mirror plane (E), wherein the imaging surface (22) contains a virtual target point (24), which corresponds to the mirror point of the probe tip (10) on the mirror plane (E),
- an optical measuring device (26, 27, 28) for generating a position signal representing the position of a laser dot (25) on the imaging surface (22),
- adjustment electronics (17) and
- a signal transmission device (18) for transmitting an actuating signal to a control device (7) of the laser distance measuring device (2), said control device specifying the direction of the laser beam (8),
wherein the adjustment electronics (17) are configured to calculate from the position signal an error signal, which represents the two-dimensional deviation of the laser dot (25) from the virtual target point (24), and
depending on the aforementioned error signal to start a correction algorithm, by means of which suitable actuating signals are generated for the control device (7) of the laser distance measuring device (2) and transmitted to said control device, in order to bring the position of the laser dot (25) on the imaging surface (22) into agreement with the position of the virtual target point (24),
wherein the correction algorithm also comprises a spatial assignment routine, with which the spatial assignment between a given error signal and an actuating signal required for its correction is produced or adapted.

2. The auxiliary device according to claim 1,
**characterized in**
that the imaging surface (22) is aligned parallel with the mirror plane (E) and has the same normal distance (d1) from the mirror plane (E) as the mirror plane (E) from the probe tip (10).

3. The auxiliary device according to claim 1 or 2,
**characterized in**
that the imaging surface (22) is a matt disc (23), on which an incident laser beam (8') of a laser distance measuring device (2) can be seen as a laser dot (25).

4. The auxiliary device according to claim 3,
**characterized in**
that the measuring device (26, 27, 28) comprises a CCD camera (26) disposed spaced apart from the matt disc (23) and orientated onto the latter, said CCD camera generating a video signal representing the position signal.

5. The auxiliary device according to any one of the preceding claims,
**characterized in**
that a two-dimensional coordinate system for the imaging surface (22) is preset in the adjustment electronics (27), wherein the error signal represents the deviation of the coordinates of the centre of a laser dot (25) imaged on the imaging surface (22) from the coordinates of the virtual target point (24).

6. The auxiliary device according to claim 5,
**characterized in**
that the coordinates of the virtual target point (24) are preset by a calibration process.

7. The auxiliary device according to any one of the preceding claims,
**characterized in**
that the correction algorithm is configured for the continuous readjustment of the laser beam (8, 8') onto the virtual target point (24), so that the laser beam (8, 8') of the laser distance measuring device (2) follows a spatial displacement of the probe tip (10).

8. The auxiliary device according to any one of the preceding claims,
**characterized in**
that the signal transmission device (17) is configured for producing a wireless communication with the control device (7) of the laser distance measuring device (2).

9. A system comprising a laser distance measuring device (2) and an auxiliary device (4, 5, 6) according to any one of the preceding claims.

10. The system according to claim 9,
**characterized in**
that the laser distance measuring device (2) is based on the principle of the propagation time measurement of a laser beam (8, 8') reflected at a diffuse-reflecting surface.

11. A method for the fine adjustment of a laser beam (8) emitted by a laser distance measuring device (2) onto a target point using a system according to claim 10, comprising the following steps:
A) rough alignment of the laser beam (8) in the direction of the target point,
B) application of the probe tip (10) of the auxiliary device (4, 5, 6) at a target point (11), in such a way that the laser beam (8) strikes the mirror (20) of the auxiliary device (4, 5, 6),
C) determination of the position signal representing the position of the laser dot (25) on the imaging surface (22) by means of the optical measuring device (26, 27, 28),
D) calculation of the error signal representing the deviation of the laser dot (25) from the virtual target point (24) by means of the adjustment electronics (17),
E) starting of the correction algorithm,
F) calculation of an actuating signal for the control device (7) of the laser distance measuring device (2), said actuating signal being suitable for correcting the deviation,
G) transmission of the actuating signal by means of the signal transmission device (17),
H) realignment of the laser beam (8) according to the transmitted actuating signal,
I) repetition of steps C) - H), at least as long as a deviation exists between the position of the laser dot (25) on the imaging surface (22) and the position of the virtual target point (24),
wherein a spatial assignment routine is carried out in the calculation of the actuating signal for the control device (7) according to step F), in order to produce or adapt the spatial assignment between an error signal and an actuating signal required for its correction.

## Revendications

1. Dispositif auxiliaire (4, 5, 6) pour l'ajustage fin d'un faisceau laser (8) envoyé par un appareil de mesure de distance par laser (2) sur un point cible, comprenant
- un miroir (20) définissant un plan de miroir (E),
- une pointe du palpeur (10) destinée à se poser sur un point cible (11) disposée pour cela sur un premier côté du plan de miroir (E) et à une distance normale (d2) prédéfinie,
- une face d'image (22) disposée sur le second côté du plan de miroir (E) et réfléchissant de manière diffuse pour un faisceau laser (8') réfléchi sur le miroir (20), sachant que la face d'image (22) contient un point cible (24) virtuel qui correspond au point de miroir de la pointe du palpeur (10) sur le plan de miroir (E),
- un dispositif de mesure optique (26, 27, 28) pour produire un signal de position représentant la position d'un point laser (25) sur la face d'image (22),
- une électronique d'ajustage (17) et un dispositif de transmission de signal (18) pour transmettre un signal de réglage à un dispositif de commande (7) de l'appareil de mesure de distance par laser (2) prédéfinissant le sens du faisceau laser (8),
sachant que l'électronique d'ajustage (17) est prévue pour calculer un signal d'erreur à partir du signal de position, qui représente l'écart bidimensionnel du point laser (25) du point cible virtuel (24), et en fonction du signal d'erreur mentionné ci-dessus, pour lancer un algorithme de correction avec lequel des signaux de réglage appropriés sont produits pour le dispositif de commande (7) de l'appareil de mesure de distance par laser (2) et transmis à celui-ci, pour amener la position du point laser (25) sur la face d'image (22) en concordance avec la position du point cible virtuel (24),
sachant que l'algorithme de correction comprend en outre une routine de répartition spatiale, avec laquelle la répartition spatiale entre un signal d'erreur donné et un signal de réglage indispensable à la correction de celui-ci est produite, respectivement, adaptée.

2. Dispositif auxiliaire selon la revendication 1,
caractérisé en ce
que la face d'image (22) est orientée parallèlement au plan de miroir (E) et présente la même distance normale (d1) au plan de miroir (E) que le plan de miroir (E) à la pointe du palpeur (10).

3. Dispositif auxiliaire selon la revendication 1 ou 2,
caractérisé en ce
que la face d'image (22) est un verre dépoli (23) sur lequel un faisceau laser (8') incident d'un appareil de mesure de distance par laser (2) est visible en tant que point laser (25).

4. Dispositif auxiliaire selon la revendication 3,
caractérisé en ce
que le dispositif de mesure (26, 27, 28) comprend une caméra CCD (26) disposée à distance du verre dépoli (23) et alignée sur celui-ci, qui produit un signal vidéo représentant le signal de position.

5. Dispositif auxiliaire selon l'une des revendications précédentes,
caractérisé en ce
qu'un système de coordonnées bidimensionnel pour la face d'image (22) est prévu dans l'électronique d'ajustage (27), sachant que le signal d'erreur représente l'écart des coordonnées du centre d'un point laser (25) représenté sur la face d'image (22) des coordonnées du point cible virtuel (24).

6. Dispositif auxiliaire selon la revendication 5,
caractérisé en ce
que les coordonnées du point cible virtuel (24) sont prédéfinies par une procédure d'étalonnage.

7. Dispositif auxiliaire selon l'une des revendications précédentes,
caractérisé en ce
que l'algorithme de correction est prévu pour parfaire en continu le réglage du faisceau laser (8, 8') sur le point cible virtuel (24), de telle sorte que le faisceau laser (8, 8') de l'appareil de mesure de distance par laser (2) suit un déplacement spatial de la pointe du palpeur (10).

8. Dispositif auxiliaire selon l'une des revendications précédentes,
caractérisé en ce
que le dispositif de transmission de signal (17) est prévu pour établir une communication sans fil avec le dispositif de commande (7) de l'appareil de mesure de distance par laser (2).

9. Système d'un appareil de mesure de distance par laser (2) et d'un dispositif auxiliaire (4, 5, 6) selon l'une des revendications précédentes.

10. Système selon la revendication 9,
caractérisé en ce
que l'appareil de mesure de distance par laser (2) repose sur le principe de la mesure du temps de propagation d'un faisceau laser (8, 8') réfléchi sur une surface réfléchissant de manière diffuse.

11. Procédé d'ajustage fin d'un faisceau laser (8) envoyé par un appareil de mesure de distance par laser (2) sur un point cible en employant un système selon la revendication 10 comprenant les étapes suivantes :
A) alignement grossier du faisceau laser (8) en direction du point cible,
B) placement de la pointe du palpeur (10) du dispositif auxiliaire (4, 5, 6) sur un point cible (11) de telle sorte que le faisceau laser (8) arrive sur le miroir (20) du dispositif auxiliaire (4, 5, 6),
C) détermination du signal de position représentant la position du point laser (25) sur la face d'image (22) avec le dispositif de mesure optique (26, 27, 28),
D) calcul du signal d'erreur représentant l'écart du point laser (25) du point cible virtuel (24) par l'électronique d'ajustage (17),
E) lancement de l'algorithme de correction,
F) calcul d'un signal de réglage approprié pour le dispositif de commande (7) de l'appareil de mesure de distance par laser (2) pour corriger l'écart,
G) transmission du signal de réglage par le dispositif de transmission de signal (17),
H) nouvel alignement du faisceau laser (8) selon le signal de réglage transmis,
I) répétition des étapes C) - H), au moins tant qu'il y a un écart entre la position du point laser (25) sur la face d'image (22) et la position du point cible virtuel (24),
sachant que lors du calcul des signaux de réglage pour le dispositif de commande (7) selon l'étape F), une routine de répartition spatiale est effectuée pour créer, respectivement, adapter la répartition spatiale entre un signal d'erreur et un signal de réglage indispensable pour la correction de celui-ci.
